# EUROPEAN PATENT SPECIFICATION

(11) **EP 3 296 106 B1**
(45) Date of publication and mention of the grant of the patent: **08.06.2022**
(21) Application number: 17189966.9
(22) Date of filing: 07.09.2017
(51) Int. Cl.: B32B 37/12, C09J 7/20

(54) **DEVICE FOR GLUEING A STRIP-LIKE CARRIER AND METHOD USING SAID DEVICE**
VORRICHTUNG ZUM VERKLEBEN EINES STREIFENFÖRMIGEN TRÄGERS UND VERFAHREN ZUR VERWENDUNG DIESER VORRICHTUNG
DISPOSITIF DE COLLAGE D'UN SUPPORT DE TYPE BANDE ET PROCÉDÉ UTILISANT CE DISPOSITIF

(30) Priority: 16.09.2016 NL 2017483
(43) Date of publication of application: 21.03.2018
(73) Proprietor: Multifoil B.V., 4131 PA Vianen (NL)
(72) Inventor: HOOFT, Johannes Wilhelmus Gerardus, 4124 AV Hagestein (NL)
(74) Representative: Jilderda, Anne Ayolt

(56) References cited:
- EP-A1- 2 859 057
- US-B1- 6 238 761

## Description

The present invention relates to a device for applying glue to a strip-like carrier, comprising infeed means for receiving the carrier, dosing means for depositing a fluid glue track at increased temperature onto the carrier and cooling means which enter into heat-exchanging contact with the carrier in order to remove heat from the glue track.

Such a device is applied particularly for applying glue to a tape material in order to deposit at least one glue track thereon. The tape is then self-adhesive or serves as transfer carrier for the glue track which is transferred separately onto a surface once it has been brought into contact therewith. In order to protect the glue track a protective sheet is normally provided thereover on the side remote from the carrier.

US patent no. 6,238,761 *discloses a release paper that has stripes where there is no adhesive. From International patent application* WO 2014/105433 *a feminine hygiene pad is known having a planar backing that carries first and second adhesive patterns at opposite sides thereof that do not substantially overlap with one another.*

The types of glue applied for the glue track usually comprise in practice thermoplastic synthetic (hot-melt) glues. These glues are fluid at increased temperature and then solidify at room temperature, wherein they provide their adhesive power. The glue is applied by means of the dosing means provided for the purpose, after which the carrier is cooled, actively or otherwise, in order to solidify the glue. Although for a full surface adhesion of the carrier and less critical applications the known device provides an excellent result, if only a narrow glue track has to be applied in precisely determined manner with a certain thickness to the carrier the known device is found to have shortcomings.

Because the glue is applied in fluid state, the glue track will still flow to some extent and thereby settle out after it has been applied. The extent hereof depends on a number of parameters, including a temperature and composition of the glue, which are not always fully controllable. Particularly when the glue track has to be applied with a relatively great thickness of for instance more than the order of 200 micron, deviations can hereby occur which are not compatible with some demanding applications, and in practice this not infrequently results in technical problems.

The present invention has for its object, among others, to provide a device for applying glue to a carrier with which a glue track can be applied while a lateral settling out of the glue track is effectively prevented so that a greater measure of control over the glue application process is retained and the glue can be applied with a relatively great thickness, as defined in claim 1.

In order to achieve the stated object a device of the type described in the preamble has the feature according to the invention that guide means are provided adjacently of the dosing means which guide the carrier in an at least substantially vertical path and place the carrier in an at least substantially fully vertical orientation in heat-exchanging contact with the cooling means. The invention is based here on the insight that flow and lateral settling of the still fluid glue track after it has been applied is caused substantially by gravitational force. Because according to the invention the carrier to which glue has just been applied is brought into a substantially vertical path by means of guide means provided for the purpose, the influence of the gravitational force on the flow behaviour of the glue track is effectively eliminated. In this vertical orientation the carrier is subjected to the cooling means so that the glue track will solidify and its form will stabilize. Particularly a lateral flow of the glue track can thus be limited to a minimum, whereby a precisely defined glue track can be applied to a relatively great thickness.

The cooling means can be embodied per se in various ways, wherein an optionally forced airflow is guided over the carrier. A particularly practical embodiment of the device has the feature in this respect that the cooling means comprise a set of cooling cylinders, which cooling cylinders are disposed vertically spaced apart and over which the carrier is received in a number of at least substantially helical turns. The cooling cylinders, also referred to as cooling rollers, maintain a decreased temperature during operation, for instance in that the cylinders are force-cooled with a coolant (cooling water) which is guided therethrough. Because the cooling cylinders are in heat-exchanging thermodynamic contact with the carrier being guided thereover, a direct cooling of the carrier and the glue track applied thereto can thus be realized.

The carrier is guided in a number of helical turns over the set of cooling cylinders in order to thus obtain a greater contact surface area therewith, whereby the cooling is enhanced. The cooling cylinders are preferably dimensioned here such that the carrier can make a sufficient number of helical turns thereover such that at the end of the cooling cylinders sufficient heat has been extracted from the at least one glue track. In order to avoid overlap of successive lengths of the carrier, this embodiment of the device according to the invention has the feature that a speed of the helical turns is greater than a width of the carrier.

In a further particular embodiment the device according to the invention is characterized in that the guide means comprise at least one comb provided close to a cooling cylinder in a path of the carrier and having a series of teeth and passages which are located between successive teeth and in which the carrier is received in laterally fitting manner, wherein successive passages are provided at a mutual pitch and impart a speed defined thereby to the helical turns. Successive helical lengths of the carrier lie fixed here between the successive passages of the comb. The pitch of the passages here determines the distance between successive lengths of the carrier, and thereby the speed of the helical turns thereof. This results in practice in a particularly effective and operationally reliable use of the device.

With a view to the use of the device for carriers of varying width, a further particular embodiment of the device according to the invention has the feature that the comb extends from a comb device from which a number of combs extend radially, each with a different pitch and/or width of the passages, which comb device is arranged rotatably about a rotation axis parallel to a cylindrical axis of the cooling cylinder. A correct comb adapted to the width of the carrier to be guided can thus be brought into position with a simple rotation of the rotatable comb device. Changeover of the device can thus be realized in an extremely short time.

A further particular embodiment of the device according to the invention has the feature that covering means are provided in order to receive a strip-like protective film and to set down the protective film onto the glue track downstream of, in particular adjacently to, the cooling means. Once provided with a protective film the at least one glue track is protected from contamination and loss of adhesive power. The protective film releases relatively easily from the glue track and can be removed just before use of the carrier. The protective film moreover allows the carrier to be wound into a roll if desired. A further particular embodiment of the device according to the invention has for this purpose the feature that downstream of, in particular adjacently to, the covering means winding means are provided for the purpose of winding the carrier provided with the protective film to form a roll.

The device according to the invention is particularly suitable for applying to a carrier a thermoplastic glue (hot-melt) which is fluid at increased temperature and solidifies after cooling. With a view to an application of a precisely defined glue track of such a glue, a further preferred embodiment of the device according to the invention has the feature that the dosing means comprise a volumetric pump which is coupled to a glue reservoir in order to receive the melted glue therefrom in a fluid state. A particularly accurate dosing of the glue is hereby possible, wherein in addition to a width of the glue track a height thereof is also controllable within close tolerances. All in all, a dead straight and neat glue track can thus be deposited on the carrier at a precisely determined fixed distance from an edge thereof.

In a particular embodiment the tape is characterized in that the carrier comprises a transfer carrier, in particular a silicone paper, from which the glue track releases after contact with a surface. Here the tape is merely a temporary transport means for the glue track which will be deposited as such onto a surface. Because as a result of the invention the glue track is in accurate register with a lateral edge of the carrier, this edge can advantageously be employed as stop for an exact alignment of the glue track on the surface.

The invention provides the particular option of thus providing a continuous carrier of a particularly great length. In a particular embodiment the carrier according to the invention has in this respect the feature that the carrier with the at least one glue track is wound continuously onto a reel. The carrier follows a substantially helical pattern over the reel here and is subsequently available therefrom for use in the same continuous great length. In order to protect the glue track before use from contamination and deterioration and to allow winding of the tape to a roll, a further particular embodiment of the tape has the feature here that at least one glue track is covered with a protective film on a side remote from the carrier.

The invention will now be further elucidated with reference to an exemplary embodiment and an accompanying drawing. In the drawing:
- figure 1: shows a schematic cross-section of an exemplary embodiment of a device according to the invention;
- figure 2: shows a cross-section of an exemplary embodiment of a tape according to the invention; and
- figure 3: shows a front view of cooling means with a tape trained thereover from the exemplary embodiment of figure 1.

The figures are otherwise purely schematic and not (all) drawn to scale. Some dimensions in particular may be exaggerated to greater or lesser extent for the sake of clarity. Corresponding parts are designated in the figures with the same reference numerals.

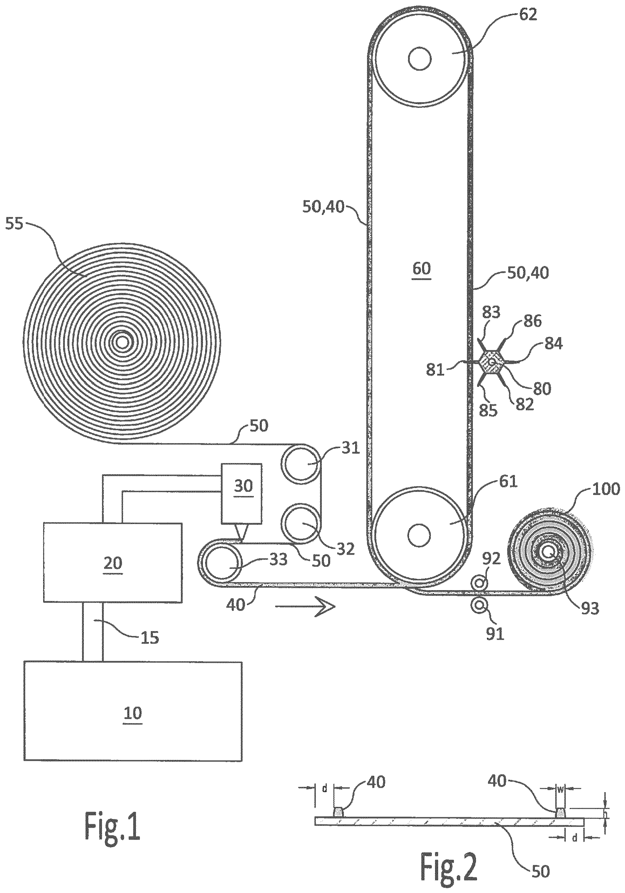

Figure 1 shows schematically a setup of a device according to the invention. Shown schematically herein is a buffer reservoir 10 in which a melted glue is held at an increased temperature above a flow point of the glue. Buffer reservoir 10 is coupled by means of conduits 15 to a control and pump unit 20. Located herein is a controller for a volumetric pump with which a nozzle 30 is supplied. Nozzle 30 itself also comprises a (secondary) volumetric pump with which a glue delivery can thus be dosed exceptionally accurately and, in particular, constantly. Also part hereof is a thermostatically controlled thermal block with which the glue is carried at a precisely determined temperature, and thereby viscosity, by nozzle 30. A glue track 40 can thus be deposited with an extremely high measure of control onto a strip-like carrier 50. The nozzle can if desired be given a dual form, or various nozzles can be applied adjacency of each other in order to deposit a plurality of glue tracks simultaneously.

Carrier 50 comprises in this embodiment a tape of double-sided siliconized paper which is unwound from a roll 55 and carried over a number of transport rollers 31..33 in a path along nozzle 30. A textile carrier can optionally also be applied, and use can also be made of single-sided siliconized paper. The tape typically has a width in the order of 20 to 80 millimetres.

The glue track 40 is deposited onto a first smooth siliconized side of the tape, and can thereby be released therefrom later without damage. The glue applied here comprises a pressure-sensitive thermoplastic synthetic glue (hot-melt) which is fluid at increased temperature and will solidify following cooling. Examples hereof are polyvinyl acetates, synthetic rubbers, epoxy resins, polyurethane (PUR) glues and UV-crosslinkable acrylate glues.

In this example the device is applied in order to deposit an uninterrupted glue bead of a pressure-sensitive synthetic rubber at a short distance (d) from each of the two longitudinal sides of the tape, see also figure 2. This rubber glue provides its complete adhesion only after a minimal pressing force has been exerted. Each glue track is deposited with a height (h) in the order of several tenths of a millimetre to typically the order of about five millimetres in accordance with the requirement. A width of each track 40 is likewise in the order of several millimetres. The track hereby has a similar height/thickness and width. In order to keep these relatively thick and still fluid tracks 40 from collapsing and flowing, tape 50 according to the invention is guided in a vertical path shortly after the track has been applied and cooled in this vertical orientation.

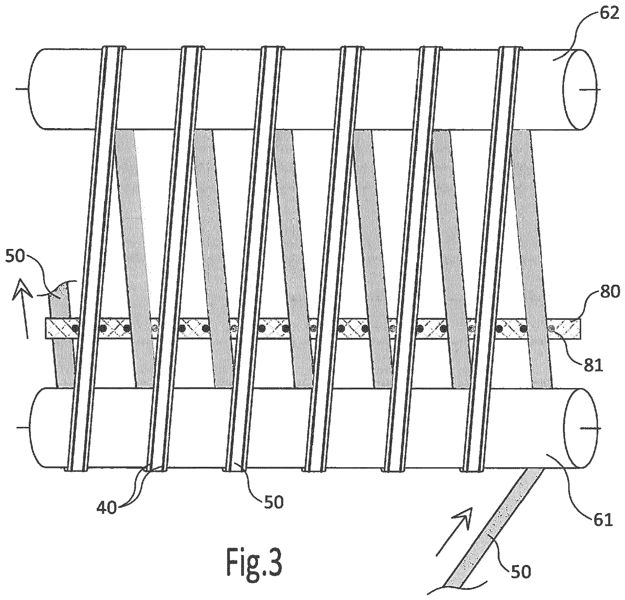

This vertical path is brought about in this embodiment by a set of cooling cylinders 61,62 of cooling means 60. The tape-like carrier 50 is trained hereover with its backing side while cooling water flows at a low temperature through the (stainless) steel cooling cylinders 61,62. Due to the heat-exchanging contact between cylinders 61,62 and tape 50 the temperature of glue track 40 will decrease and the two glue beads will eventually solidify. For the purpose of an optimal heat exchange the tape is guided in several helical turns over the two cooling cylinders 61,62, see figure 3. The contact surface area between the cylinders and the tape is hereby enlarged, whereby a high throughfeed speed remains possible.

In order to guide the tape in a correct helical track the device comprises a tape guide in the form of a comb 80 with sets of teeth 81..86. A passage between these teeth is adapted to a width of tape 50, while a pitch of successive sets of teeth 81 sets the helical progression of the tape. Shown in figure 2 is that comb 80 is rotatable about a central axis thereof. In radial direction the comb carries different series of teeth 81..86 which can thus be placed in position by rotating the comb. These toothings 81..86 are each specifically adapted to different tape widths, in this example of respectively 28, 38, 45, 65 and 75 millimetres. Toothings 81..86 each provide passages of these differing widths between sets of teeth and pitches adapted thereto between the passages. The device can thus be utilized for varying tape widths with a simple rotation of the comb without this requiring a time-consuming changeover.

Once glue track 40 has solidified sufficiently under the influence of cooling means 60 and the glue beads have each thus taken on a fixed form, the tape can if desired be brought into a horizontal path if the construction of the device requires this. The distance d to the longitudinal sides at which the two glue beads have been applied is thus accurately maintained, and this can also be relied on to be the case, with a high measure of precision, in the final product. According to the invention this distance d can already be set from about the order of 500 micron with a high measure of precision.

The product is finally wound with winding means 91..93 to form a roll 100. The end product is now ready for further processing and packaging. The product can be rolled up into a straight roll here, though can if desired also be wound onto a reel.

## Claims

1. Device for applying glue to a strip-like carrier (50), comprising infeed means (31-33) for receiving the carrier, dosing means (30) for depositing a fluid glue track (40) at increased temperature onto the carrier and cooling means (60) which enter into heat-exchanging contact with the carrier in order to remove heat from the glue track, **characterized in that** guide means (80) are provided adjacently of the dosing means (30) which guide the carrier (50) in an at least substantially vertical path and place the carrier in an at least substantially fully vertical orientation in heat-exchanging contact with the cooling means.

2. Device as claimed in claim 1, **characterized in that** the cooling means (60) comprise a set of cooling cylinders, which cooling cylinders (61,62) are disposed vertically spaced apart and over which the carrier is received in a number of at least substantially helical turns.

3. Device as claimed in claim 2, **characterized in that** a speed of the helical turns is greater than a width of the carrier.

4. Device as claimed in claim 2 or 3, **characterized in that** the guide means comprise at least one comb (80) provided close to a cooling cylinders (61,62) in a path of the carrier and having a series of teeth (81-86) and passages which are located between successive teeth and in which the carrier (50) is received in laterally fitting manner, wherein successive passages are provided at a mutual pitch and impart a speed defined thereby to the helical turns.

5. Device as claimed in claim 4, **characterized in that** the comb (80) extends from a comb device from which a number of combs extend radially, each with a different pitch and/or width of the passages, which comb device is arranged rotatably about a rotation axis parallel to a cylindrical axis of the cooling cylinder.

6. Device as claimed in one or more of the foregoing claims, **characterized in that** covering means are provided in order to receive a strip-like protective film and to set down the protective film onto the glue track downstream of, in particular adjacently to, the cooling means.

7. Device as claimed in claim 6, **characterized in that** downstream of, in particular adjacently to, the covering means winding means (91-93) are provided for the purpose of winding the carrier provided with the protective film to form a roll (100).

8. Device as claimed in one or more of the foregoing claims, **characterized in that** the glue track (40) comprises a pressure-sensitive thermoplastic synthetic glue (hot-melt) which is fluid at increased temperature and solidifies after cooling.

9. Device as claimed in claim 8, **characterized in that** the dosing means (30) comprise a volumetric pump which is coupled to a glue reservoir in order to receive the melted glue therefrom in a fluid state.

10. *Method for forming a tape by which a strip-like carrier (50) is provided with at least one glue track (40) parallel to on edge of said carrier at an at least substantially constant thickness greater than about 200 micron, by using the device according to anyone of the preceding claims.*

## Patentansprüche

1. Vorrichtung zum Verkleben eines streifenförmigen Trägers (50), umfassend Vorschubmittel (31-33) zur Aufnahme des Trägers, Dosiermittel (30) zum Aufbringen einer Flüssigkleberspur (40) mit erhöhter Temperatur auf den Träger und Abkühlmittel (60), welche mit dem Träger in wärmeaustauschenden Kontakt treten, um Wärme aus der Klebspur abzuführen,
**dadurch gekennzeichnet, dass**
Führungsmittel (80) neben den Dosiermitteln (30) bereitgestellt werden, welche den Träger (50) in einem zumindest im Wesentlichen vertikalen Pfad führen und den Träger in einer zumindest im Wesentlichen vollvertikalen Orientierung mit den Abkühlmitteln in wärmeaustauschenden Kontakt bringen.

2. Vorrichtung nach Anspruch 1,
**dadurch gekennzeichnet, dass**
die Abkühlmittel (60) einen Satz Kühlzylinder umfassen, dessen Kühlzylinder (61, 62) vertikal zueinander beabstandet angeordnet sind und über die der Träger in einer Anzahl von zumindest im Wesentlichen schraubenförmigen Windungen aufgenommen wird.

3. Vorrichtung nach Anspruch 2,
**dadurch gekennzeichnet, dass**
eine Geschwindigkeit der schraubenförmigen Windungen größer als eine Breite des Trägers ist.

4. Vorrichtung nach Anspruch 2 oder 3,
**dadurch gekennzeichnet, dass**
die Führungsmittel zumindest einen Kamm (80) umfassen, welcher in einer Nähe zu einem der Kühlzylinder (61, 62) in einem Weg des Trägers bereitgestellt wird und eine Reihe von Zähnen (81-86) und Passagen, welche sich sukzessive zwischen den Zähnen befinden, aufweist, in welchen der Träger (50) seitlich passend aufgenommen wird, wobei aufeinanderfolgende Passagen an einer gemeinsamen Umfangsposition bereitgestellt werden und den schraubenförmigen Windungen eine dadurch definierte Geschwindigkeit aufprägen.

5. Vorrichtung nach Anspruch 4,
**dadurch gekennzeichnet, dass**
sich der Kamm (80) von einer Kammeinrichtung, von der sich eine Anzahl an Kämmen radial weg erstrecken, erstreckt, von denen ein jeder eine unterschiedliche Umfangsposition und/oder Breite der Passagen aufweist, wobei die Kammeinrichtung drehbar um eine Rotationsachse parallel zu einer Zylinderachse der Abkühlzylinder angeordnet ist.

6. Vorrichtung nach einem der vorgehenden Ansprüche,
**dadurch gekennzeichnet, dass**
Abdeckmittel bereitgestellt werden, um einen streifenförmigen Schutzfilm zu empfangen und auf die Flüssigkleberspur stromab davon aufzutragen, insbesondere neben den Abkühlmitteln.

7. Vorrichtung nach Anspruch 6,
**dadurch gekennzeichnet, dass**
stromab, insbesondere neben den Abdeckmitteln, Wickelmittel (91-93) bereitgestellt werden, um den mit dem Schutzfilm ausgestatteten Träger zu einer Rolle (100) aufzuwickeln.

8. Vorrichtung nach einem der vorhergehenden Ansprüche,
**dadurch gekennzeichnet, dass**
die Flüssigkleberspur (40) einen druckempfindlichen thermoplastischen synthetischen Kleber (Schmelzkleber) umfasst, welcher bei höheren Temperaturen flüssig ist und nach einem Abkühlvorgang aushärtet.

9. Vorrichtung nach Anspruch 8,
**dadurch gekennzeichnet, dass**
die Dosiermittel (30) eine Pumpe umfassen, welche an ein Klebstoffreservoir gekoppelt ist, um den geschmolzenen Kleber daraus in einem flüssigen Zustand zu empfangen.

10. Verfahren zum Formen eines Bands, durch das ein streifenförmiger Träger (50) bereitgestellt wird mit zumindest einer Flüssigkleberspur (40) parallel zu einer Kante von besagtem Träger mit einer zumindest im Wesentlichen konstanten Dicke, welche größer als ungefähr 200 µm ist, durch Nutzung der Vorrichtung nach einem der vorhergehenden Ansprüche.

## Revendications

1. Dispositif pour appliquer de la colle à un support sous forme de bande (50), comprenant des moyens d'alimentation (31, 33) pour recevoir le support, des moyens de dosage (30) pour déposer un filet de colle fluide (40) à température accrue sur le support et des moyens de refroidissement (60) qui entrent en contact d'échange de chaleur avec le support afin d'extraire la chaleur du filet de colle, **se caractérisant en ce que** des moyens de guidage (80) sont disposés de manière adjacente aux moyens de dosage (30) pour guider le support (50) le long d'un trajet substantiellement vertical et placer le support dans une direction au moins substantiellement pleinement verticale en contact d'échange de chaleur avec les moyens de refroidissement.

2. Dispositif selon la revendication 1, **se caractérisant en ce que** les moyens de refroidissement (60) comprennent un ensemble de cylindres de refroidissement, lesdits cylindres de refroidissement (61, 62) étant disposés verticalement écartés les uns des autres et le support étant reçu par-dessus ces derniers en réalisant plusieurs tours au moins substantiellement hélicoïdaux.

3. Dispositif selon la revendication 2, **se caractérisant en ce qu'**une vitesse des tours hélicoïdaux est supérieure à une largeur de le support.

4. Dispositif selon la revendication 2 ou 3, **se caractérisant en ce que** les moyens de guidage comprennent au moins un peigne (80) disposé à proximité d'un cylindre de refroidissement (61, 62) sur un trajet du support et possédant une série de dents (81-86) et de passages qui sont situés entre les dents successives et dans lesquels le support (50) est reçu en s'y fixant latéralement, les passages successifs étant disposés à un pas réciproque et transmettant une vitesse ainsi définie aux tours hélicoïdaux.

5. Dispositif selon la revendication 4, **se caractérisant en ce que** le peigne (80) s'étend depuis un dispositif à peignes depuis lequel plusieurs peignes s'étendent radialement, chacun avec un pas différent et/ou une largeur différente de passage, ledit dispositif à peignes étant disposé de manière à réaliser une rotation autour d'un axe de rotation parallèle à un axe cylindrique du cylindre de refroidissement.

6. Dispositif selon une ou plusieurs de revendications précédentes, **se caractérisant en ce que** des moyens de couverture sont disposés afin de recevoir un film protecteur en bande et d'appliquer le film protecteur sur le filet de colle en aval des moyens de refroidissement, en particulier de manière adjacente à ceux-ci.

7. Dispositif selon la revendication 6, **se caractérisant en ce que** en aval des moyens de couverture, en particulier de manière adjacente à ceux-ci, des moyens d'enroulement (91-93) sont disposés afin d'enrouler le support équipé du film protecteur pour former un rouleau (100).

8. Dispositif selon une ou plusieurs de revendications précédentes, **se caractérisant en ce que** le filet de colle (40) comprend une colle de synthèse thermostatique sensible à la pression (thermofusible) qui est fluide à température accrue et se solidifie après refroidissement.

9. Dispositif selon la revendication 8, **se caractérisant en ce que** les moyens de dosage (30) comprennent une pompe volumétrique qui est couplée à un réservoir de colle afin de recevoir la colle fondue à l'état fluide.

10. Méthode pour former une bande au moyen duquel un support sous forme de bande (50), est équipé d'au moins un filet de colle (40) parallèle à un rebord dudit support à une épaisseur au moins substantiellement constante supérieure à 200 microns environ, en utilisant le dispositif suivant l'une quelconque des revendications précédentes.
